Europäisches Patentamt

European Patent Office

Office européen des brevets

(11) Veröffentlichungsnummer: **0 097 965**
**A2**

(12) # EUROPÄISCHE PATENTANMELDUNG

(21) Anmeldenummer: 83106336.7

(51) Int. Cl.³: **C 12 C 1/04**

(22) Anmeldetag: 29.06.83

(30) Priorität: 30.06.82 DE 3224471

(43) Veröffentlichungstag der Anmeldung:
**11.01.84 Patentblatt 84/2**

(84) Benannte Vertragsstaaten:
AT BE CH DE FR GB IT LI LU NL SE

(71) Anmelder: Air Fröhlich AG für Energierückgewinnung
Romanshorner Strasse 100
CH-9320 Arbon(CH)

(72) Erfinder: Frei, Willi
Höchster Strasse 11 b
CH-9016 St. Gallen(CH)

(74) Vertreter: Füchsle, Klaus, Dipl.-Ing. et al,
Hoffmann . Eitle & Partner Patentanwälte
Arabellastrasse 4
D-8000 München 81(DE)

(54) Verfahren und Einrichtung zum kontinuierlichen Mälzen von zerealem Korngut.

(57) Die Erfindung beschreibt ein Verfahren zum kontinuierlichen Mälzen von zerealem Korngut, bei dem das Korngut einem mehrere übereinander angeordnete Horden aufweisenden Behandlungsraum zugeführt und in diesem von einem Hordenboden auf den anderen von oben nach unten gebracht und mit einem Medium behandelt wird, wobei jeweils eine Schicht des auf einer Horde liegenden Korngutes abgetragen und auf die darunterliegende Horde aufgebracht wird. Dieses Verfahren ist dadurch gekennzeichnet, daß das Korngut in im wesentlichen stetiger Vertikal-Abwärtsbewegung gehalten wird, wobei die Abtragsschicht von einer Horde auf die darunterliegende andere Horde derart aufgebracht wird, daß die Korngutschichten ihre Relativ-position zueinander beibehalten. Dabei wird von der auf einer Horde liegenden Korngutschicht jeweils eine dünne, zuunterst auf der Horde aufliegende Schicht abgetragen, die dann auf die obere Fläche der auf der darunterliegenden Horde befindlichen Korngutschicht aufgebracht wird. Hierdurch wird erreicht, daß das Korngut, ohne umgeschichtet zu werden, kontinuierlich alle Stufen des Mälzers vertikal durchläuft und gleichzeitig von dem Durchlüftungs- bzw. Trocknungsmedium im Gegenstromprinzip beaufschlagt wird.

Außerdem wird eine Einrichtung zum Durchführen des erfindungsgemäßen Verfahrens beschrieben, bei welcher zum kontinuierlichen, schichtweisen Abtragen des Kornguts eine Schiebeeinrichtung direkt auf dem Hordenboden und mit diesem zusammenwirkend angeordnet ist. Dabei ist die Schiebeeinrichtung derart in den Hordenboden integriert, daß sogenannte Hordenmodule gebildet werden, welche sich im wesentlichen in allen Stufen, von der Weichstufe bis hin zur Kühlstufe, wiederholen.

./...

EP 0 097 965 A2

FIG. 1

FIG. 7

- 1 -

Verfahren und Einrichtung zum kontinuierlichen Mälzen
von zerealem Korngut

Die Erfindung bezieht sich auf ein Verfahren zum kontinuierlichen Mälzen von zerealem Korngut entsprechend dem
Oberbegriff des Patentanspruchs 1. Sie betrifft außerdem
eine Einrichtung zum Ausüben dieses Verfahrens entsprechend dem Oberbegriff des Anspruchs 10.

Aus dem Schrifttum für Mälzereitechnik sind kontinuierlich arbeitende Anlagen unterschiedlicher Bauweise bekannt. Dabei unterscheidet man im wesentlichen zwischen
horizontal arbeitenden Anlagen und vertikal arbeitenden
Anlagen, den sog. Vertikaldarren.

Eine Horizontaldarre ist aus der DE-OS 28 00 184 bekannt.
Bei dieser wird das Gut mit Hilfe eines gelochten Transportbandes horizontal und kontinuierlich durch die Einrichtung, die unterschiedliche Behandlungszonen aufweist, transportiert. Dabei wird das Gut stufenweise von
oben bzw. von unten mit mehr oder weniger warmer Luft im
Kreuzstrom zur Gutförderrichtung beaufschlagt. Hierfür
weist die Einrichtung einen Wärmetauscher auf, durch welchen die Frischluft durch die Abluft vorgewärmt wird, bevor die Frischluft weiter aufgeheizt wird. Des weiteren
ist eine zusätzliche Luftverbindung zwischen zwei Stufen zum Mischen von Luftmengen vorhanden.

Eine ähnliche Luftführung in bezug auf kontinuierlich gefördertes Korngut wird auch in den durch die DE-AS
24 44 034 und DE-AS 1 604 920 bekannten Vertikal-Säulen-
Darren vorgenommen. In diesen Darren wird das Korngut in
vertikalen Säulen von oben nach unten transportiert, wobei die Säulen durch Schieber in Zonen unterteilt sind
und in jeder Zone das Gas bzw. die Heißluft von einer
anderen Horizontalrichtung im Kreuzstrom durch die Säule hindurchtritt. Diese bekannten Darrverfahren bzw. Einrichtungen erlauben zwar ein kontinuierliches Darren. Jedoch weisen sie den Nachteil auf, daß nicht jedes Korn in etwa die gleiche Behandlung erfährt, da eine unterschiedliche Durchströmung der im wesentlichen gleichbleibend orientierten Schichten des Kornguts stattfindet. So werden z.B. die am äußeren Rand des Kornguts befindlichen Schichten durch Temperatur- und Feuchtigkeitsunterschiede andere Konditionen besitzen als die inneren Schichten des Kornguts.

Kontinuierlich arbeitende Mälzereien, in welchen das Korngut im wesentlichen vertikal von oben nach unten gefördert wird, sind ebenfalls bekannt. So zeigt beispielsweise die DE-AS 16 42 617 ein Verfahren und eine Anlage zum kontinuierlichen Mälzen, bei welchen alle Behandlungsstufen, vom Waschen über Weichen, Keimen bis hin zum Darren automatisch gesteuert und geregelt werden. Dabei werden mehrere, mit horizontalen Bändern gekoppelte Schrägrutschen verwendet, wobei jedem Band individuell Heizzone und Regler bzw. Kühler und Lüfter, Befeuchtungseinrichtung usw. zugeordnet ist. Diese bekannte Einrichtung ist sehr aufwendig. Beim Überführen des Guts von einem zum anderen Band über die zugeordnete Rutsche wird das Gut teilweise umgewälzt, so daß eine Umschichtung des Kornguts erfolgt. Dies bringt den Nachteil mit sich, daß keine gleichmäßige Durchströmung des Kornguts gegeben ist, daß also nicht jedes Korn in allen Behandlungsstufen die gleichen Konditionen erfährt. Des weiteren ist diese bekannte Anlage sehr aufwendig, da sie aus einer Vielzahl von Einrichtungen zusammengesetzt ist.

Ein weiteres Verfahren und eine Einrichtung zum kontinuierlichen Mälzen zerealen Kornguts zeigt die DE-OS 30 20 511. Dieses Vertikal-Mälzsystem besteht im wesentlichen aus einem als Behandlungsraum dienenden Schacht, in welchem perforierte Rutschen zick-zack-förmig angeordnet sind, auf welchen das Korngut kontinuierlich von oben nach unten gefördert und je nach durchwanderten Zonen mit den entsprechenden Behandlungsmedien, wiederum im Kreuzstrom zur Gutförderrichtung, beaufschlagt wird. Dabei wird die Verweilzeit des Korngutes auf den Rutschen von einem in einem Entnahmekanal befindlichen Förderer bestimmt. Durch die zick-zack-förmig angeordneten Rutschen ist bei vorgegebener Anzahl von Stufen pro Zone eine relativ große Schachthöhe notwendig. So müßten diese Vertikaldarren Höhen von 80 m und mehr aufweisen. Des weiteren ist der Nachteil gegeben, daß beim Übergang des Korngutstromes von einer Rutsche auf die andere bzw. bei der dabei erfolgenden Richtungsumkehr eine Umschichtung des Korngutes erfolgt. Des weiteren ist eine Querschnittsverengung bei diesem Übergang gegeben, wodurch eine Relativverschiebung der Gutkörner bzw. ein Auseinanderziehen des Gutstromes bezweckt und gegeben ist. Aus der Literatur ("Die Technologie der Malzbereitung", 6. Auflage, Ferdinand Enke Verlag Stuttgart 1976, Seite 304) ist aber bekannt, daß beim Darren, solange der Wassergehalt des Korngutes hoch ist, nicht gewendet werden darf, da sonst eine Verzögerung des Trocknungsprozesses eintritt. Die Malzschicht trocknet nämlich langsam von unten nach oben durch. Nach beispielsweise 4 bis 5 Stunden Schwelkzeit ist das unmittelbar auf der Horde liegende Malz fühlbar trockener als das auf der Oberschicht befindliche. Wird nun gewendet, so gelangt das feuchte Malz nach unten, das schon trockene nach oben. Damit wird das bereits getrocknete Malz wieder von Feuchtigkeit durchdrungen, während das feuchte in den Bereich höherer Temperatur gerät und somit Gefahr läuft, zu schrumpfen bzw. an Mürbheit zu verlieren.

Schließlich zeigt die BE-PS 871 899 eine Anlage zur Herstellung von Malz, bei welcher das Korngut in einem mehrere vertikal übereinander angeordnete Horden aufweisenden Behandlungsraum zugeführt und in diesem Behandlungsraum von oben nach unten bewegt wird. Hierzu ist jede der Horden drehbar angeordnet. Jeder der derart ausgebildeten Horde ist eine feststehende Ausräumschnecke und eine Verteilmühle zugeordnet. Mittels der jeweiligen feststehenden Ausräumschnecke wird in Verbindung mit der zugeordneten drehbaren Horde von der darauf befindlichen Korngutschicht die unterste Teilschicht abgeräumt. Das Korngut dieser Teilschicht gelangt dann über einen außerhalb des Behandlungsraumes liegenden Schacht zur Verteilmühle der darunterliegenden Horde, mittels welcher das Korngut der geförderten Teilschicht wieder in den Behandlungsraum eingeführt und auf die Korngutschicht der darunterliegenden Horde aufgebracht wird.

Bei dieser bekannten Anlage erfolgt also das Abräumen der jeweiligen untersten Teilschicht der Korngutschicht jeder Horde und das Aufbringen des Kornguts dieser abgeräumten Teilschicht auf die Korngutschicht der nächsten darunterliegenden Horde auf relativ komplexe und aufwendige Weise. Der gesamte, große und schwere Hordenboden wird mitsamt der darauf befindlichen Korngutschicht in Drehung versetzt. Es müssen somit relativ große Massen in Bewegung gesetzt werden. Bei der Drehung der Horde räumt die feststehende Ausräumschnecke die Teilschicht "linienförmig" im Verlauf einer kompletten Drehung, d.h. über eine gewisse Zeitspanne, ab. Die auf diese Weise abgetragene Teilschicht wird dann radial aus dem Behandlungsraum ausgebracht, axial eine Etage tiefer befördert, anschließend radial wieder in den Behandlungsraum eingeführt und schließlich mittels der Verteilmühle auf die Gutschicht der darunterliegenden Horde aufgebracht. Dies bedeutet, daß die Schichtung im Korngut zerstört wird und damit die Gefahr besteht, daß das Korngut im Verlauf seiner Beförderung durch den turmartigen Behandlungsraum nicht stets ingesamt den identischen Behandlungsbedingungen unterworfen wird mit der Folge, daß die Qualität des Malzes beeinträchtigt werden kann. Der geschilderte komplexe Bewegungsablauf über mehrere Förderelemente kann darüber hinaus zu einer mechanischen Beschädigung des Kornguts führen. Schließlich ergibt sich auch aus den erläuterten Bewegungsabläufen und den daran beteiligten Aggregaten ein aufwendiger Aufbau der bekannten Anlage.

Nach der weiteren Beschreibung dieser Entgegenhaltung wird der sehr wesentlichen Belüftung bzw. Konditionierung des Kornguts wenig Beachtung geschenkt. Eine Belüftung wird lediglich über jeweils zwischen zwei Hordenböden angeordnete Ventilatoren vorgenommen, welche jedoch ein völliges und inniges Durchdringen der Gutschicht mit dem Trocknungs- bzw. Durchlüftungsmedium nicht sicherstellen können.

Aufgabe der Erfindung ist es nun, ein kontinuierliches Mälzverfahren anzugeben, durch welches eine im wesentlichen stetige Bewegung des Korngutes ohne Richtungsänderung ermöglicht wird, derart, daß das Korngut gleichzeitig vom Trocknungs- bzw. Lüftungsmedium im Gegenstrom oder - wenn zweckdienlich - im Gleichstrom durchflossen wird. Es soll dabei eine gleichmäßige, sichere, schichtweise Übergabe des Kornguts von einer Horde auf die andere sichergestellt sein, und zwar auch in der Keimzone, ohne daß die Keimlinge (Wurzel, Keimblatt) beschädigt werden. Es soll des weiteren ein Auseinanderziehen des Korngutes, um aufgrund der Keim- und Wurzelbildung dessen Verfilzung zu vermeiden, möglich sein, ohne daß eine Umschichtung des Kornguts stattfindet. Des weiteren soll das Verfahren beim Darren möglichst wirtschaftlich sein, wobei die benötigte Wärme mit maximaler Effizienz verwendet und von einer zentralen Luftaufbereitung die gesamte Speisung aller Darrhorden bei gleichbleibender Strömungsrichtung erreicht werden soll.

Diese Aufgabe wird gemäß der Erfindung durch ein Verfahren mit den Merkmalen des Anspruches 1 gelöst. Danach wird das Korngut innerhalb des Behandlungsraums dadurch in im wesentlichen stetiger Vertikal-Abwärtsbewegung gehalten, daß jeweils von der auf einer Horde befindlichen Korngutschicht die zu unterst aufliegende Teilschicht über die gesamte Hordenfläche und im wesentlichen gleichzeitig nach unten zu der nächsten Horde abgeführt wird. Damit ist eine "flächenmäßige" und praktisch gleichzeitige Übergabe der Teilschichten von einer Horde auf die andere möglich mit dem Ergebnis einer im wesentlichen stetigen Vertikal-Abwärtsbewegung. Dabei bleiben die Schichtungen des Korngutes im praktischen Umfang stets erhalten, so daß "mikroskopisch" gesehen jedes Korn dieselbe Behandlung erfährt wie das in der Teilschicht benachbarte. Zugleich wird das Korngut ohne Umlenkung in der stetigen Vertikal-Abwärtsbewegung gehalten, so daß auch mechanische Beschädigungen weitgehend vermieden sind. Schließlich erlaubt das erfindungsgemäße Verfahren eine infinitesimale und variable Schichtdicke bezüglich der von der jeweiligen Horde abzuräumenden untersten Teilschicht, während bei der bekannten, zuletzt diskutierten Anlage eine bestimmte Mindesthöhe der abzuräumenden Teilschicht aufgrund des Durchmessers der Förderschnecke festgelegt ist.

Erfindungsgemäß kommt zu der geschilderten optimalen Bewegung des Kornguts im Behandlungsraum hinzu, daß dieses derart vertikal bewegte Korngut ebenfalls vertikal von dem Trocknungs- bzw. Durchlüftungsmedium durchflossen bzw. umspült wird. Damit wird - mikroskopisch gesehen - jedes Korn der Teilschicht von einem identisch eingestellten Medium, z.B. Luft von vorgegebener Temperatur und Feuchtigkeit, beaufschlagt. Aufgrund der stetigen Vertikal-Abwärtsbewegung des Kornguts in relativ auseinandergezogener Form erfolgt dabei ein besonders inniges Umspülen des Kornguts durch das Trocknungs- und Durchlüftungsmedium.

Dabei ist es gemäß einer Weiterbildung des Erfindungsgedankens besonders vorteilhaft, wenn gleichzeitig von allen Hordenböden die gleiche Abtragsschicht von der oberen Schicht von unten her ab- und auf die darunterliegende Schicht aufgetragen wird. Hierdurch wird ein genau kontrollierbarer, stetiger Durchflußrhythmus des Kornguts erreicht, so daß eine genaue Berechnung der Verweilzeiten bzw. der Menge des Durchlüftungs- bzw. Trocknungsmediums problemlos möglich ist.

Es besteht erfindungsgemäß jedoch auch die Möglichkeit, die Abtragsschicht von den verschiedenen Horden je nach Zone in unterschiedlichem Rhythmus weiter zu bewegen, je nach Verweilzeit der Schicht auf den jeweiligen Horden. Hierdurch kann beispielsweise die eine oder andere Horde stärker beladen oder aber je nach Bedarf eine dikkere oder dünnere Schicht vom Hordenboden von unten her abgetragen werden.

Es ist erfindungsgemäß von Vorteil, in der gesamten Mälzeinrichtung im wesentlichen kontinuierlich (schichtweise) das Korngut von oben nach unten zu bewegen, während das Trocknungs- bzw. Durchlüftungsmedium von unten nach oben oder von oben nach unten die Korngutschichten durchfließt. Es besteht aber auch die Möglichkeit, lediglich in der Darrzone die kontinuierliche, schichtweise Vertikal-Bewegung des Korngutes im Gegenstrom mit dem Trocknungsmedium zu führen. Es kann nämlich auch zweckmäßig sein, nicht in allen Zonen des Vertikalmälzers eine schichtweise Entnahme des Korngutes vorzusehen, sondern lediglich in der Darrzone, während es bei anderen Voraussetzungen wiederum zweckmäßiger erscheint, in allen Zonen und Stufen eine schichtweise Abtragung vorzusehen.

Es ist des weiteren vorteilhaft, wenn ein Teil der auf Abdarrtemperatur aufgeheizten Frischluft zumindest einer der darüberliegenden Horden, beispielsweise der Schwelkhorde, zusätzlich zugeführt wird. Hierdurch wird erreicht, daß die Trocknungsluft, die bereits die Abdarr- und die Aufheizschichten durchlaufen hat, mit wärmerer Trockenluft angereichert die Schwelkschicht durchfließt. Hierdurch wird ein besseres Trocknen des Grünmalzes bereits während des Schwelkens erreicht, wodurch die.Qualität des Malzes insgesamt erhöht wird.

Besonders vorteilhaft ist auch, wenn zur Erreichung der Gegenstrom- bzw. Gleichstromführung von Korngut und Luft in der Keimzone jeweils zwei Horden eine eigene Luftzuführung zugeordnet ist.

Im Darr-Prozeß ist es besonders vorteilhaft, wenn das Grünmalz bereits vor Eintreffen in der Darrzone, also bereits im Vorratsbehälter, gut durchlüftet und vorgetrocknet wird. Dies wird erfindungsgemäß dadurch erreicht, daß durch eine Niedertemperatur-Abwärmeverwertung vorgewärmte Abluft in den Vorratsbehälter eingeführt wird. Es wird folglich erfindungsgemäß noch zusätzliche Energie aus noch relativ warmer Abluft oder anderen Niedertemperatur-Abwärmequellen verwendet, um die gewünschte Vortrocknung des Grünmalzes zu erreichen, während bei den bekannten Darreinrichtungen diese Luft ohne weitere Nutzung direkt in die Atmosphäre geführt wird.

Der Erfindung liegt ferner als weitere Aufgabe die Ausbildung einer Einrichtung zur Durchführung des beschriebenen Verfahrens zugrunde. Diese Einrichtung soll einen einfachen Aufbau mit störungsfreier Funktion erlauben. Sie soll dabei im wesentlichen aus gleichen Bauelementen (Modul-Bauweise) in allen Zonen bzw. Stufen zusammengesetzt werden können, also eine kostengünstige Herstellung, leichte Wartung und gute Auswechselbarkeit erlauben.

Diese Aufgabe wird gemäß der Erfindung durch die Merkmale des Anspruchs 10 gelöst.

Dabei wird ausgegangen von der Anlage nach der DE-PS 60 371. Bei der in dieser Druckschrift beschriebenen Anlage zur Erzeugung von Malz sind in einem schachtartigen Behandlungsraum eine Anzahl übereinander angeordneter Keimungsbehälter vorgesehen. Die Keimungsbehälter weisen jeweils hochgezogene Wände auf, wobei die Längswände hohl sind und mit gelochten, auf den Behälterböden aufliegenden, ebenfalls gelochten dachförmigen Querkanälen in Verbindung stehen. Die zwischen den Querkanälen liegenden Abschnitte der Behälterböden weisen Durchtritte auf, die nach unten hin durch Schieber oder Jalousien schließbar sind. Durch Öffnen der Schieber wird die gesamte, in dem betreffenden Keimungsbehälter befindliche Korngutschicht in den darunterliegenden Keimungsbehälter befördert.

Der diskutierten Druckschrift ist danach keine Anregung zu entnehmen, die jeweils zu unterst auf einem Hordenboden aufliegende Teilschicht der auf diesem Hordenboden befindlichen Korngutschicht abzuräumen und diese Teilschicht auf die Korngutschicht der nächstfolgenden Horde aufzubringen mit dem Ziel, eine im wesentlichen stetige Vertikal-Abwärtsbewegung des Kornguts über die gesamte Höhe des Behandlungsraums zu erreichen.

Um dieses Ergebnis mit einer Anordnung vergleichbar der bekannten Einrichtung zu erreichen, wurde erfindungsgemäß diese bekannte Einrichtung dahingehend ergänzt, daß zwischen jeweils zwei Durchtritten jeweils ein Korngutschieber angeordnet ist, dessen vertikale Höhe der abzuräumenden Teilschicht im wesentlichen entspricht und der synchron mit den zugehörigen Schleusenschiebern bewegbar ist. Durch diese Maßnahme wird die Abräumeinrichtung dahingehend modifiziert, daß eine wählbare Teilschicht von der Unterseite der Korngutschicht der jeweiligen Horde abgeräumt und auf die darunterliegende Horde aufgebracht werden kann. Durch eine entsprechende Anzahl von Hordenböden und Bewegungszyklen der Korngutschieber wird die angestrebte, im wesentlichen stetige Vertikal-Abwärtsbewegung des Kornguts über die gesamte Höhe des Behandlungsraums "simuliert", d.h. erreicht.

Durch die DE-OS 25 51 624 ist schließlich eine Keimeinrichtung mit Darre bekannt, die aus vertikal übereinander angeordneten, kastenförmigen Horden besteht. Jeder Horde ist eine Verteilschiebereinrichtung für das Abräumen der jeweils oberen Schicht des Korngutes zugeordnet. Diese Schiebereinrichtung ist zusammen mit den Stirnwänden der jeweiligen kastenförmigen Horde absenkbar, so daß schichtweise die ganze Horde von oben nach unten abgerollt werden kann. Dazu muß allerdings die darunter befindliche Horde bereits geleert sein, um das Korngut der darüberliegenden Horde aufnehmen zu können. Dadurch ist mit dieser Einrichtung ein kontinuierlicher Betrieb nicht möglich. Zugleich findet eine Umschichtung des gesamten Korngutes statt, womit der bei den vorhergehenden beschriebenen bekannten Einrichtungen bestehende Nachteil ebenfalls gegeben ist. Damit ist auf dem vorliegenden Fachgebiet zwar eine Schiebereinrichtung für das schichtweise Abräumen des Korngutes aus einer Horde bekannt, jedoch arbeitet diese bekannte Darre nach einem völlig anderen Prinzip wie die erfindungsgemäße Anordnung und demgemäß dient die bekannte Schiebereinrichtung ebenfalls einem anderen Zweck als die erfindungsgemäße Konstruktion.

Nach einem Ausführungsbeispiel der erfindungsgemäßen Einrichtung kann vorteilhafterweise der Hordenboden aus nebeneinander angeordneten und mit ihren Schenkeln nach unten weisenden U-Profilen oder geschlossenen Hohlprofilen bestehen, wobei zwischen den Schenkeln der jeweils angrenzenden Profile (Hordenelemente) ein den Durchtritt bildender Abstand vorgesehen ist. Des weiteren können die Hordenelemente aus jedem anderen Längsprofil gebildet sein, welches nach oben hin eine glatte Fläche aufweist und an den Seiten einen glatten Durchtritt ermöglicht.

Erfindungsgemäß umfaßt die auf dem Hordenboden angeordnete Schiebeeinrichtung im wesentlichen mehrere, quer zu den Durchtritten angeordnete Achsen, an welchen Schieber derart angeordnet sind, daß diese mit ihrer Unterseite auf dem Hordenboden anliegend verschoben werden können. Dabei ist jedem Hordenelement mindestens ein Schieber zugeordnet, welcher auf einer Achse befestigt ist und zusammen mit dieser Achse eine Schiebebewegung ausübt. Dieser Schieber ist ein Korngutschieber, welcher, wie seine Benennung bereits anzeigt, das Korngut jeweils in die Durchtritte schiebt.

Dieser Korngutschieber kann unterschiedlich ausgebildet sein. So kann er eine leistenförmige Ausbildung oder eine U-förmige Ausbildung aufweisen, wobei bei der U-förmigen Ausbildung die Öffnung des Profils zum Hordenboden hin zeigt, also der U-förmige Schieber sich auf seinen Schenkeln auf der Horde abstützt.

Gemäß einer Weiterbildung des Erfindungsgedankens kann an den Verschiebeachsen noch eine Serie weiterer Schieber vorgesehen sein, welche die Durchtritte zwischen den Hordenelementen je nach Schieberbewegung schließen bzw. öffnen. Diese weiteren Schieber sind U-förmige Schleusenschieber, welche im wesentlichen über jeweils einem Durchtritt angeordnet sind und diesen in der Mittenstellung des Korngutschiebers verschließen. Dabei können die Schleusenschieber eine Breite (Schenkelabstand) aufweisen, der etwas größer ist als die Breite des zugeordneten Durchtritts, so daß der Durchtritt lediglich in der Mittenposition des Schiebers abgedeckt ist. Des weiteren kann der Schleusenschieber eine Breite aufweisen, die im wesentlichen mindestens doppelt so groß ist wie die Breite des Durchtritts, wobei der Schleusenschieber auf der Schiebeachse nur einseitig über eine Achsmitnahme verbunden ist. Hierdurch wird erreicht, daß der Schieber nur bei Vorhandensein von Korngut zwischen Korngutschieber und Schleusenschieber von seiner Schließposition über dem Durchtritt weggeschoben wird. Bei Fehlen von Korngut bleibt der Schleusenschieber in seiner Schließposition über dem Durchtritt stehen.

Gemäß einer anderen Weiterbildung des Erfindungsgedankens sind jeweils über jedem Durchtritt mit Perforationen versehene Einlaufschrägen angeordnet. Dabei können je zwei dieser Einlaufschrägen über jedem Durchtritt mit ihrem nach oben weisenden Ende derart zusammengefaßt sein, daß sie ein Dach bilden, welches sich im wesentlichen über dem Durchtritt befindet. Die unteren Kanten der Einlaufschrägen sind dabei bis nahe an den zugeordneten Korngutschieber hinuntergezogen, wobei jeweils zwei nebeneinanderliegende Unterseiten der Einlaufschrägen einen Korngutdurchlaß bilden. Durch diesen Korngutdurchlaß gelangt das Korngut auf bzw. neben die Korngutschieber und wird bei deren Verschiebebewegung in die Durchtritte im Hordenboden hindurchgeschoben. Die Ausbildung der Unterseite des Einlaufschrägen-Daches und der Korngutschieber ist dabei derart konstruktiv aufeinander abgestimmt, daß eine vorbestimmte, portionsweise Abtragung des Korngutes in den gewünschten Teilschichten stattfindet. Ferner kann beispielsweise der untere Rand der Einlaufschrägen in Richtung zu dem zugehörigen Durchtritt hin waagerecht abgebogen sein oder auch in einem kastenförmigen Abschluß münden, durch welchen die Höhe der abgeschobenen Schicht genau vorbestimmt werden kann. Die letztere Ausbildung weist auch den Vorteil auf, daß durch den kastenförmigen Abschluß des Einlaufschrägen-Daches gleichzeitig ein Luftzufuhrkanal gebildet wird, durch welchen zusätzliche Durchlüftungs- bzw. Trocknungsluft dem Korngut zugeführt werden kann. Dabei ist es vorteilhaft, daß die Breite des Abschlusses des Luftzufuhrkanals gleich dem Abstand der Endpositionen von je zwei nebeneinander angeordneten Korngutschiebern im Verhältnis zu den Hordenbodendurchtritten ist. Hierdurch wird eine besonders genaue Portionierung der Schichtabtragung ermöglicht, ohne daß eine Quetschung des Gutes stattfindet.

Nach einem besonders vorteilhaften Ausführungsbeispiel der Erfindung bildet das jeweilige aus einem Hohlprofil bestehende Hordenelement einen Zuluftkanal und ist hierfür mit Düsen versehen, über die Luft von unten her durch den Hordenboden und weiter durch das Korngut geführt wird, um den gewünschten Gegenstrom zwischen Korngut und Luft zu erreichen. Bei dieser Ausführungsform ergibt sich eine besonders simple Konstruktion, die einfach hergestellt und montiert werden kann.

Es kann aber auch zweckmäßig sein, wenn unter einer Horde jeweils im wesentlichen mittig zu den Hordenelementen je ein mit Düsen versehenes Zuluftrohr angeordnet ist. Hiermit wird erreicht, daß insbesondere bei Fehlen des dachförmigen über dem Hordenboden liegenden Zuluftkanals zu jedem Hordenboden bei Bedarf zusätzliche Luft eingebracht werden kann.

Durch die oben beschriebenen Ausführungsformen des mit Schieberelementen ausgestatteten Hordenbodens ist die Möglichkeit gegeben, daß der Hordenboden aus Modul-Elementen zusammengesetzt werden kann. Je ein Hordenelement, mindestens ein Zuluftkanal und ein Korngutschieber und/ bzw. ein Schleusenschieber bilden zusammengenommen jeweils ein Modul, welche in benötigter Anzahl und vorherbestimmter Weise aneinandergereiht einen Hordenboden ergeben. Durch die gleichmäßige Aufbauweise der Hordenböden können diese Horden-Module entsprechend einfach vorgefertigt und an Ort und Stelle zusammengefügt werden. Von dem Ort der Herstellung zu dem Ort der Montage dieser Module ist ein Transport besonders einfach, da nicht große, sperrige Böden zu transportieren sind. Auch ist bei Beschädigung eines Elementes eines Moduls dieses leicht in seiner Gänze zu entfernen und durch ein neues zu ersetzen.

Gemäß einer Weiterbildung des Erfindungsgedankens ist an der Unterseite der schräge Rutschwände aufweisenden Kühlzone des Vertikal-Mälzers mindestens ein selbstabdichtendes Zellrad angeordnet. Das jeweilige Zellrad ist in einem schachtförmigen Gehäuse gelagert, welches an seiner Unterseite einen über einen Flansch befestigten Trog aufweist, der wiederum an seiner Unterseite Schrägschlitze besitzt. Das Zellrad selbst ist im wesentlichen aus einer Nabe mit einem zentrischen Mitnahmeprofil und aus speichenförmigen Zellwänden gebildet, wobei es lediglich über die äußeren Kanten der Zellwände am inneren Umfang des Troges abgestützt ist. Das Zellrad weist folglich keine achsförmige Lagerung auf, sondern stützt sich an seiner Unterseite ausschließlich an dem seinem Umfang angepaßten Trog ab.

Ferner ist die eine Wand der Einlaufrutsche derart in das Innere des Zellradschachtes hineingezogen, daß sie im wesentlichen tangential zu dem Außenumfang des Zellrades auf der während dessen Betrieb nach oben sich bewegenden Seite zu stehen kommt und dabei mit der einen Wand des Zellradschachtes einen Korndurchtritt bildet. Durch diesen erfindungsgemäßen Aufbau des Zellrades ist ein weiterer Schritt in der Realisierung einer möglichst wirtschaftlichen Einrichtung getan worden, da bei Verschleißerscheinungen des Zellrades durch einfaches Lösen der Flanschverbindung der Trog samt Zellrad leicht abgenommen und schnell durch neue Teile ersetzt werden kann.

Nachfolgend wird die Erfindung anhand von Ausführungsbeispielen unter Bezug auf die Zeichnung näher beschrieben. Es zeigt

Figur 1 eine schematische Darstellung eines Querschnittes durch einen kompletten Vertikal-Mälzer, bei welchem im wesentlichen alle Hordenböden erfindungsgemäß ausgestattet sind;

Figur 2 einen Querschnitt durch eine erfindungsgemäße Darr-Anlage, also eine Einrichtung, welche nur die Darr-Zone enthält;

Figur 3 eine schematische Darstellung der Luftführung in einer Darranlage gemäß Fig. 2;

Figur 4 einen Querschnitt in schematischer Darstellung durch die Kühlzone einer erfindungsgemäßen Vertikaldarre;

Figur 5 einen teilweisen Schnitt durch eine Schieber-Einrichtung, wie sie beispielsweise bei einer der Schleusen der Kühlzone Verwendung findet, mit U-förmigem Korngutschieber und auf einer Achse befestigtem Schleusenschieber;

Figur 6 einen ähnlichen Schnitt wie in Fig. 5, mit leistenförmigem Korngutschieber und nur einseitig über die Schiebeachse mitnehmbarem Schleusenschieber;

Figur 7 eine schematische Darstellung eines Querschnitts durch eine erfindungsgemäße Horde mit U-förmigen Hordenelementen, dachförmig zusammengeschlossenen Einlaufschrägen, einem leistenförmigen Korngutschieber und einem unter dem Hordenelement vorgesehenen Zuluftrohr;

Figur 8 eine schematische Darstellung eines Querschnitts durch eine erfindungsgemäße Horde analog Fig. 7, jedoch mit ausgeschlossenen Hohlprofilen gebildeten Hordenelementen, die jeweils einen Zuluftkanal bilden;

Figur 9 einen Schnitt ähnlich wie in Fig. 7, mit einem einen Zuluftkanal bildenden, geschlossenen Einlaufschrägen-Dach und mit Schleusenschieber;

Figur 10 einen Schnitt durch ein selbstdichtendes Zellenrad nach der Erfindung und

Figur 11 eine Ansicht auf die Unterseite des Trogs des Zellrades mit darin vorgesehenen Schrägschlitzen.

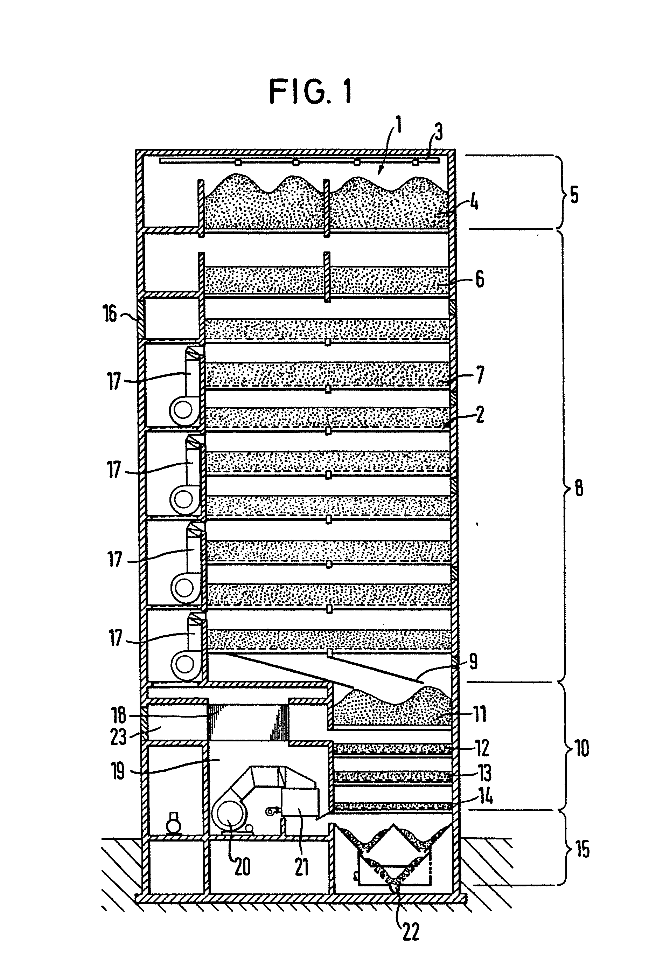

Die Einrichtung zum kontinuierlichen Mälzen von zerealem Korngut besteht, wie in Fig. 1 dargestellt, aus einem vertikalen Behandlungsraum 1, welcher durch waagerechte Horden 2 in eine oder mehrere Stufen aufweisende Zonen unterteilt ist. Das über bekannte Transportmittel 3 in den Behandlungsraum eingebrachte Korngut 4, beispielsweise Gerste, wird im Korngutpuffer 5 gespeichert. Von diesem Korngutpuffer 5 gelangt das Gut auf eine darunterliegende Horde, die Weichhorde 6, in welcher das Korngut mit Weichmittel entweder von unten aufgeschwemmt wird oder von oben besprüht wird. Das Weichmittel kann aber auch in das Innere der Korngutschicht eingeführt und von dort verteilt werden. Nachdem das Korngut entsprechend geweicht ist, wird es auf die erste der darunterliegenden Keimhorden 7 der Keimzone 8 gebracht. Hier wandert nun das Keimgut von einer Horde zur anderen, bis es nach dem Verweilen auf der letzten Keimhorde über unter dieser angeordnete Einlaufrutschen 9 in die Darrzone 10 gelangt. Die Darrzone 10 besteht aus einem Vortrockner 11, auch Grünmalzpuffer genannt, aus einer Schwelkhorde 12, einer Aufheizhorde 13 und einer Abdarrhorde 14. Danach gelangt das fertige Malz in die schräge Einlaufwände aufweisende und von Frischluft durchströmte Kühlzone 15 und schließlich über ein Zellrad 22 auf nichtdargestellte Entnahmeeinrichtungen.

In Höhe der ersten Keimhorde 7 ist eine Frischluftzufuhr 16 vorgesehen, durch welche Frischluft in das Innere der Einrichtung geführt wird. Jeweils zwei Keimhorden 7 ist ein Ventilator 17 zugeordnet, um den Keimhorden Luft zuzuführen und damit das Gut zu durchlüften. Die Frischluft gelangt von der Frischluftzufuhr 16 vertikal nach unten, wo sie, durch die Abluft mittels eines Wärmetauschers 18 vorgewärmt, in die Darrluftaufbereitung 19 gelangt. Diese Darrluftaufbereitung 19 besteht im wesentlichen aus einem Gebläse 20, welches die vorgewärmte Frischluft durch einen Lufterhitzer 21 hindurchtreibt. Aus dem Lufterhitzer 21 gelangt die Luft durch die Abdarrhorde 14, die Aufheizhorde 13 und die Schwelkhorde 12, um durch die durch den Wärmetauscher 18 hindurchführende Abluftleitung 23 in die Außenluft zu gelangen.

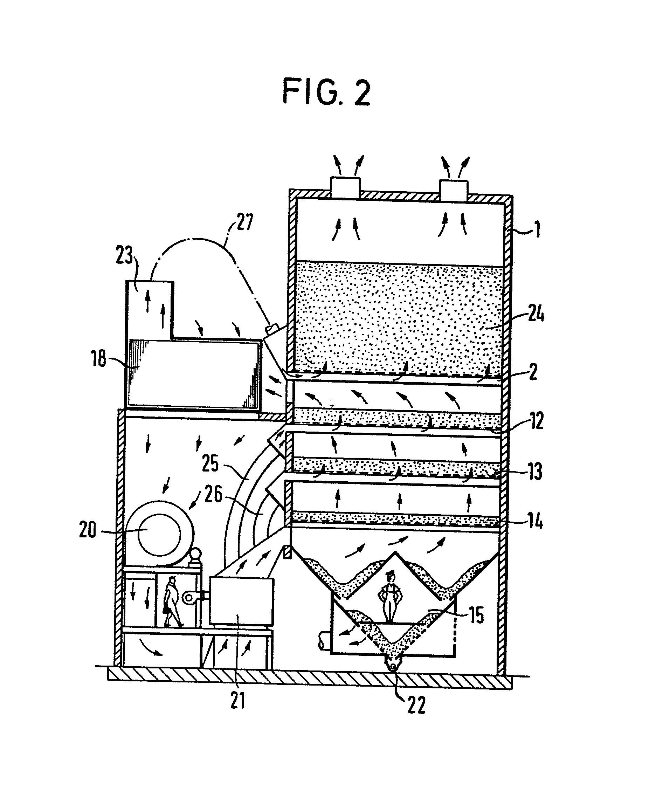

In Fig. 2 ist eine Vertikaldarre dargestellt, welche neben einem Tagestank für Grünmalz 24 Darren für das Schwelken 12, Aufheizen 13 und Abdarren 14 und die Kühlzone 15 aufweist. Von dem Lufterhitzer 21 können By-pass-Leitungen 25 bzw. 26 zu den Horden 12 bzw. 13 führen. Des weiteren kann die aus dem Abluftkanal 23 abgeführte Abluft durch eine Leitung 27 in den Tagestank 24 geleitet werden, um das darin befindliche Grünmalz vorzutrocknen.

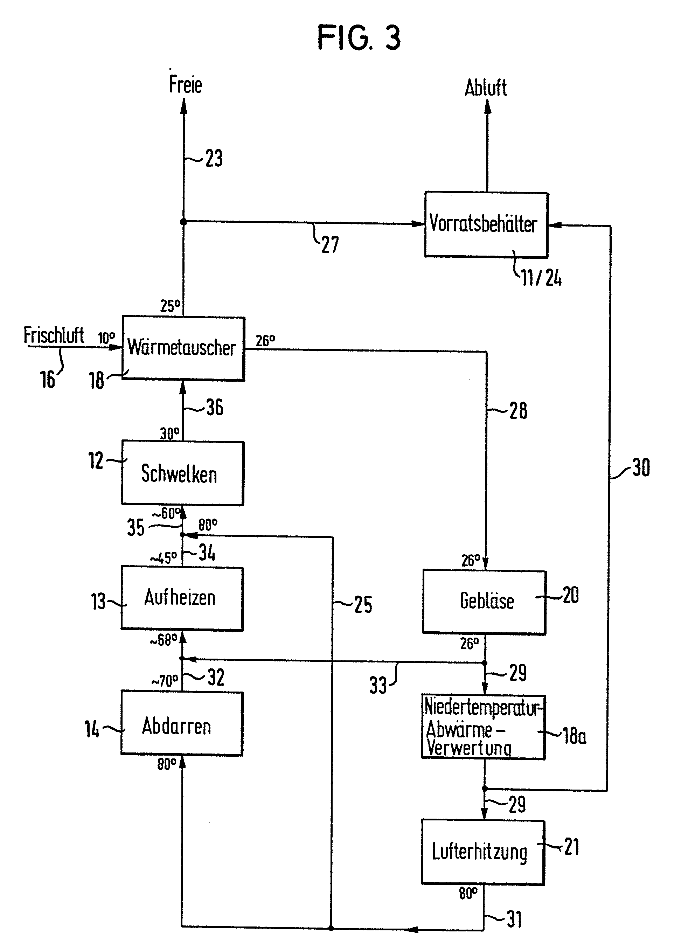

In Fig. 3 ist schematisch dargestellt, wie in der Vertikal-Darre nach Fig. 2 das Trocknungsmedium, also die Luft, durch die verschiedenen Vorrichtungen bzw. Darrstufen hindurchgeführt bzw. zu- und abgeleitet wird. Durch die Frischluftleitung 16 gelangt eine Temperatur von ca. $10^{\circ}$C aufweisende Frischluft durch den Wärmetauscher 18 hindurch, wonach sie eine Temperatur von ca. $26^{\circ}$C besitzt. Diese angewärmte Luft wird über eine Leitung 28 in ein Gebläse 20 geführt, welches die Luft über eine Leitung 29 in den Lufterhitzer 21 drückt. Zwischen dem Gebläse 20 und dem Lufterhitzer 21 ist in dem gezeigten Ausführungsbeispiel noch eine Niedertemperatur-Abwärmeverwertung 18a angeordnet, nachdem ein gewisser Teil der Luft abgezweigt und in den Tagestank (Vorratsbehälter) 11 bzw. 24 geleitet wird, um das darin befindliche Grünmalz zu durchlüften und schon etwas zu erwärmen. Aus dem Lufterhitzer 21 gelangt der Hauptteil der Luft, auf ca. $80^{\circ}$C erhitzt, über eine Leitung 31 in die Abdarrstufe 14, welche sie mit ca. $70^{\circ}$C und mit Feuchtigkeit angereichert verläßt. Über eine Leitung 32, in welche eine Leitung 33 führt, kann von der Leitung 29 auf ca. $26^{\circ}$C angewärmte Luft noch zugemischt werden, so daß schließlich durch die Leitung 32 in die Aufheizstufe 16 Luft mit ca. 68°C gelangt, um diese Stufe mit ca. 45°C über die Leitung 34 zu verlassen. Von der Leitung 31 ist eine By-pass-Leitung 25 zu der Leitung 34 geführt, so daß Luft von 80°C zugemischt und über eine Leitung 35, die somit Luft von ca. 60°C enthält, der Schwelkstufe 12 zugeleitet wird. Hiermit wird also der Schwelkstufe 12 warme, trockene Luft noch zusätzlich zu der bereits relativ abgekühlten, ziemlich angefeuchteten Luft zugesetzt. Das Trocknungsmedium verläßt die Schwelkstufe 12 mit einer Temperatur von ca. 30°C über eine Leitung 36, um, durch den Wärmetauscher 18 hindurchgeführt, diesen mit einer Temperatur von 25°C über eine Leitung 23 in das Freie zu verlassen. Sie kann aber auch gegebenenfalls in den Vorratsbehälter 24 eingeleitet werden, falls durch sie noch eine Vortrocknung des darin befindlichen Grünmalzes erreicht werden kann.

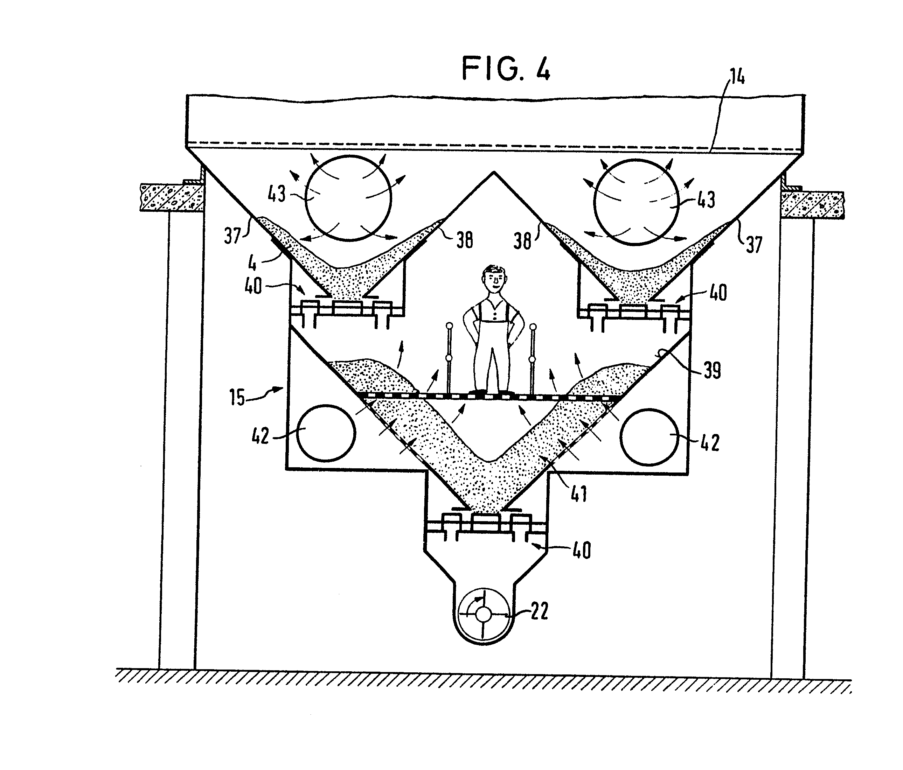

In Fig. 4 ist eine vorteilhafte Ausgestaltung der Kühlzone 15 schematisch dargestellt. Dabei ist zu ersehen, daß unter der Abdarrhorde 14 jeweils aus Einlaufrutschen 37 und 38 gebildete Kanäle vorhanden sind, welche über noch im weiteren näher beschriebene Schleusen 40 das Gut in einen aus perforierten Einlaufrutschen 39 bestehenden Sammelschacht 41 befördern. Durch Kühlluftrohre 42 wird Frischluft durch die Perforationen der Einlaufrutschen 39 hindurchgeblasen, die das hier befindliche, noch relativ warme Gut abkühlen. Am Boden des Sammelschachtes 41 ist eine weitere Schleuse 40 angeordnet, über welche das Gut zu einem noch im weiteren ausführlich beschriebenen Zellrad 22 und einer diesem zugeordneten, aber nicht dargestellten Abräumeinrichtung gelangt. Unter der Abdarrhorde 14 befinden sich zwei Zuluftrohre 43, über welche der Abdarrhorde 14 Heißluft zugeführt wird. Während in dem dargestellten Fall nur unterhalb der untersten Schleuse 40 ein Zellrad 22 angeordnet ist, ist es auch denkbar, daß unter den oberen Schleusen 40 ebenfalls Zellräder angeordnet sind. Es ist aber auch möglich, daß die Schleusen ausschließlich durch entsprechend ausgebildete Zellräder dargestellt werden.

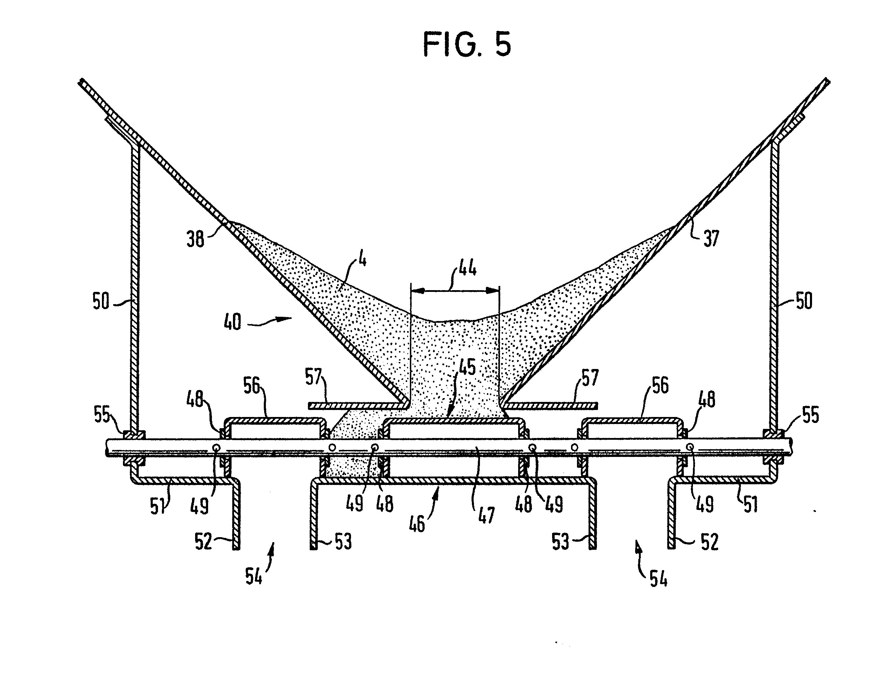

In Fig. 5 ist schematisch eine Schleuse 40 dargestellt, welche im wesentlichen aus den Einlaufrutschen 37 und 38 besteht, deren untere Kanten einen bestimmten Abstand zueinander aufweisen und somit einen Korngutdurchlaß 44 bilden. Unter diesem Durchlaß ist ein U-förmiger Korngutschieber 45 angeordnet, welcher mit seinen Schenkeln auf einem noch im weiteren näher zu beschreibenden Hordenelement 46 verschieblich aufliegt. Dabei ist, durch beide Schenkel des Schiebers 45 hindurchgeführt, eine Achse 47 vorgesehen, auf welcher der Schieber 45 beispielsweise über Scheiben 48 und Stifte 49 befestigt ist. Zu beiden Seiten der Schleuse ist je eine eine Abstufung 51 und einen Schenkel 52 aufweisende Wand 50 derart angeordnet, daß die Abstufung 51 mit dem horizontalen Teil des Hordenelementes 46 auf gleicher Höhe liegt und der Schenkel 52 mit einem Schenkel 53 des Hordenelementes 46 einen vertikalen Durchtritt 54 bildet. In den Wänden 50 sind jeweils Lager 55 für die Aufnahme der Achse 47 vorgesehen. Auf der Achse 47 sind jeweils mittig über den Durchtritten 54 und diese von oben her abschließende Schleusenschieber 56 über Scheiben 48 und Stifte 49 befestigt. Die Einlaufrutschen 37 und 38 weisen an ihren unteren Enden zu den Durchtritten 54 hinweisende Fortsätze 57 auf. Wird die Achse 47 samt darauf befindlichen Schiebern 55 und 56 verschoben, so wird Korngut, welches in den Zwischenraum zwischen jeweils zwei Schieber gelangt ist, in jeweils einen der Durchtritte 54 geschoben, so daß das Korngut durch diese Durchtritte 54 hindurchfällt, um auf die darunterliegende Horde bzw. in den darunterliegenden Sammelschacht 41 zu gelangen.

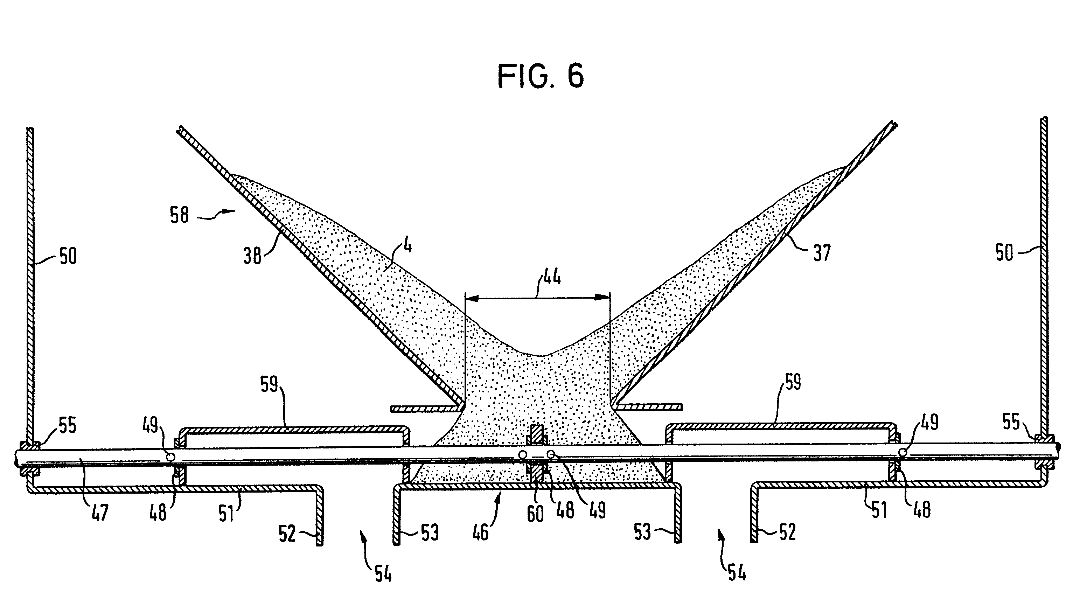

Die in Fig. 6 dargestellte Schleuse 58 besitzt im wesentlichen den gleichen Aufbau wie die Schleuse 40 aus Fig. 5. Der Korngutschieber 60 weist die Form einer Leiste auf, während der Schleusenschieber 59 wesentlich größer ist als der Schleusenschieber 56 der Fig. 5, so daß bei einem Hub nach der dem Schieber 59 entgegengesetzten Seite der Durchtritt 54 immer noch von dem Schieber 59 abgedeckt ist. Des weiteren ist der Schleusenschieber 59 nur einseitig mit einem Anschlag, bestehend aus Scheibe 48 und Stift 49, versehen, so daß der Schieber 59 nur bei seinem jeweiligen Einwärtshub von der Achse 47 mitgenommen wird. Bei seiner Auswärtsbewegung wird der Schieber 59 von dem zwischen Korngutschieber 66 und Schieber 59 befindlichen und von dem Schieber 60 geschobenen Korngut entlang der Achse 47 zurückgenommen. Diese Ausführung weist den Vorteil auf, daß der Schieber 59 in geschlossener Position verbleibt, wenn kein Gut vorhanden ist, welches beim Verschieben des Korngutschiebers 60 den Schleusenschieber 59 mitnimmt. So bleibt trotz Verschieben des Schiebers 60 bei Ausbleiben von Gut der Durchtritt 54 verschlossen, so daß auch kein Luftdurchtritt stattfindet.

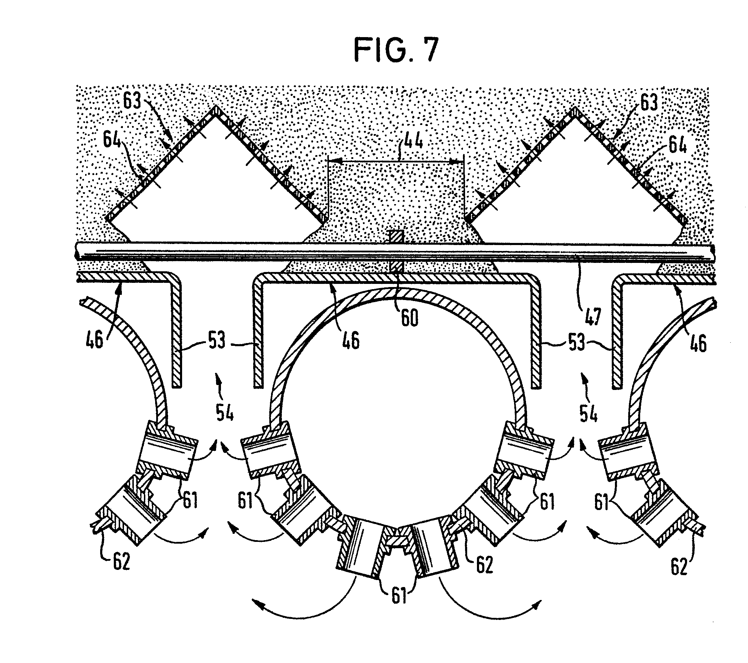

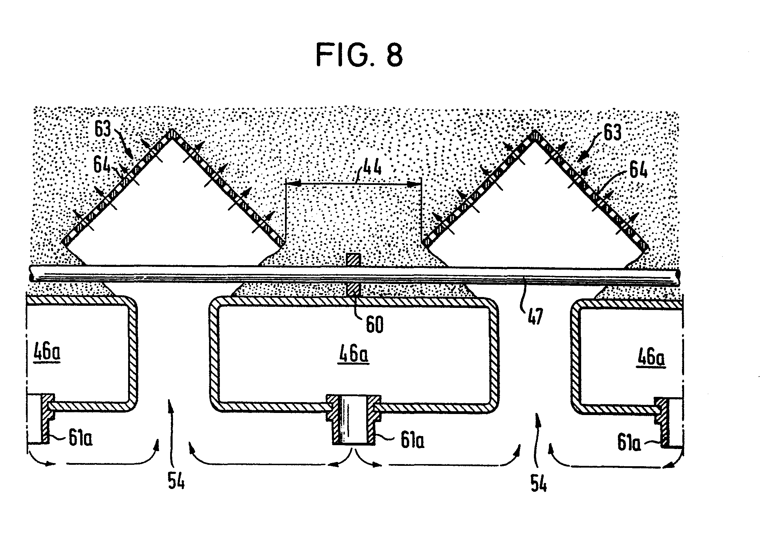

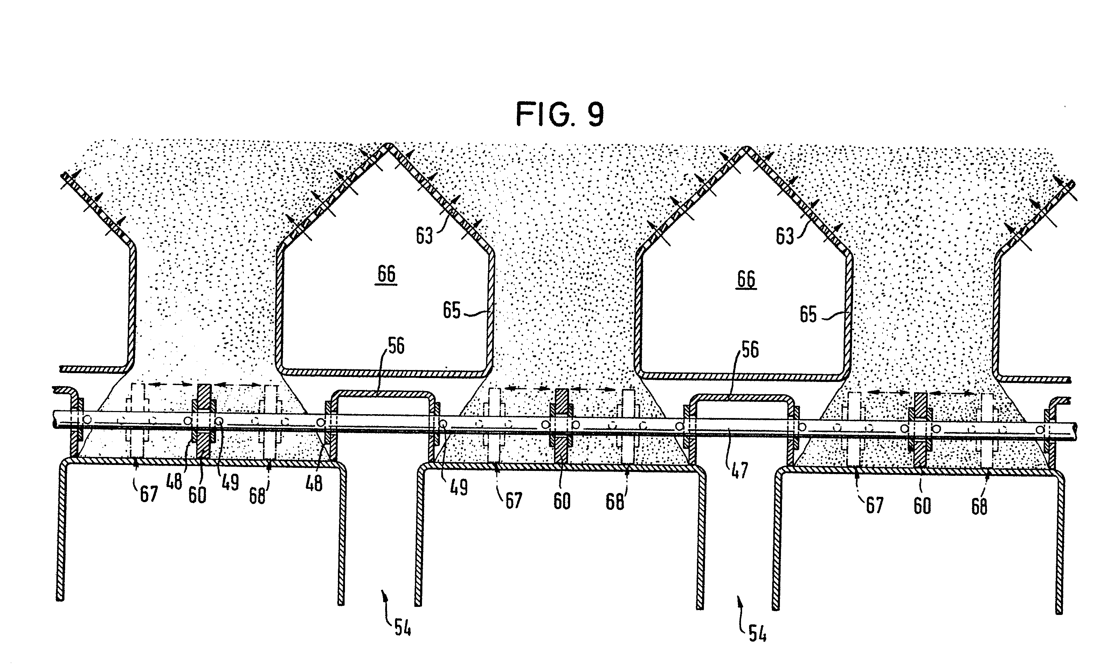

Fig. 7, 8 und 9 zeigen Ausführungen der Horden, die im wesentlichen die gleichen Grundelemente wie die Schleusen aus Fig. 5 und 6 enthalten. Die Horden bestehen aus mehreren nebeneinander angeordneten Hordenelementen, die in den Ausführungsbeispielen und Fig. 7 und 9 aus U-Längsprofilen 46 gebildet sind, während sie nach Fig. 8 aus Hohlprofilen 46a bestehen. Die Schenkel 54 der Hordenelemente 46, 46a sind dabei derart beabstandet, daß sie zwischen sich Durchtritte 54 bilden. Gemäß Fig. 7 ist im wesentlichen jeweils mittig unter jedem der Hordenelemente 46 ein mit Düsen 61 versehenes Zuluftrohr 62 derart angeordnet, daß die aus diesem Rohr unter Druck ausströmende Luft durch die Durchtritte 54 hindurchtritt, wo sie durch die Perforation von ein Dach 63 bildenden Einlaufschrägen 64 hindurchgelangt, um das Korngut zu durchströmen. Die Einlaufschrägen 46 des Daches 63 weisen eine ähnliche Funktion auf wie die Einlaufrutschen 37 und 38 der Schleusen nach Fig. 5 und 6. Sie bilden also einen Korngutdurchlaß 44, durch welchen hindurch das Korngut zu dem leistenförmigen Schieber 60 gelangt, um von diesem je nach Hub in den einen oder anderen Durchtritt 54 geschoben zu werden.

Gemäß Fig. 8 sind, wie schon erwähnt, die Hordenelemente 46a aus Hohlprofilen gebildet. Diese Hohlprofile bilden zugleich einen Zuluftkanal ähnlich dem Zuluftrohr 62 der Anordnung nach Fig. 7, wofür sie mit Düsen 61a versehen sind.

Der in Fig. 9 dargestellte Hordenboden besitzt im Vergleich zu dem in Fig. 7 dargestellten einen U-förmigen, in Mittelstellung des Korngutschiebers 60 den Durchtritt 54 verschließenden Schleusenschieber 56. Des weiteren weist das Dach 63 an seiner Unterseite einen U-förmigen Abschluß 65 auf, wodurch ein geschlossener, im wesentlichen fünfeckiger Luftzufuhrkanal 66 gebildet wird. Dieser Luftzufuhrkanal 66 übernimmt nunmehr die Rolle des Luftzufuhrkanals 62 aus Fig. 7, kombiniert mit dem Dach 63 aus dieser Figur. Hierdurch wird eine sehr kompakte Bauweise realisiert. Der Korngutdurchlaß 44, der zwischen den Vertikalwänden des Abschlusses 65 gebildet ist, weist im wesentlichen die gleiche Breite wie ein Doppelhub des Korngutschiebers 60 auf. Damit wird sichergestellt, daß dann, wenn sich der Schieber 60 in seiner einen oder anderen Endposition 67 oder 68 befindet, das Korngut jeweils im wesentlichen nur auf die eine Seite des Schiebers fällt, womit Korngutstauungen zwischen den Schiebern vermieden sind.

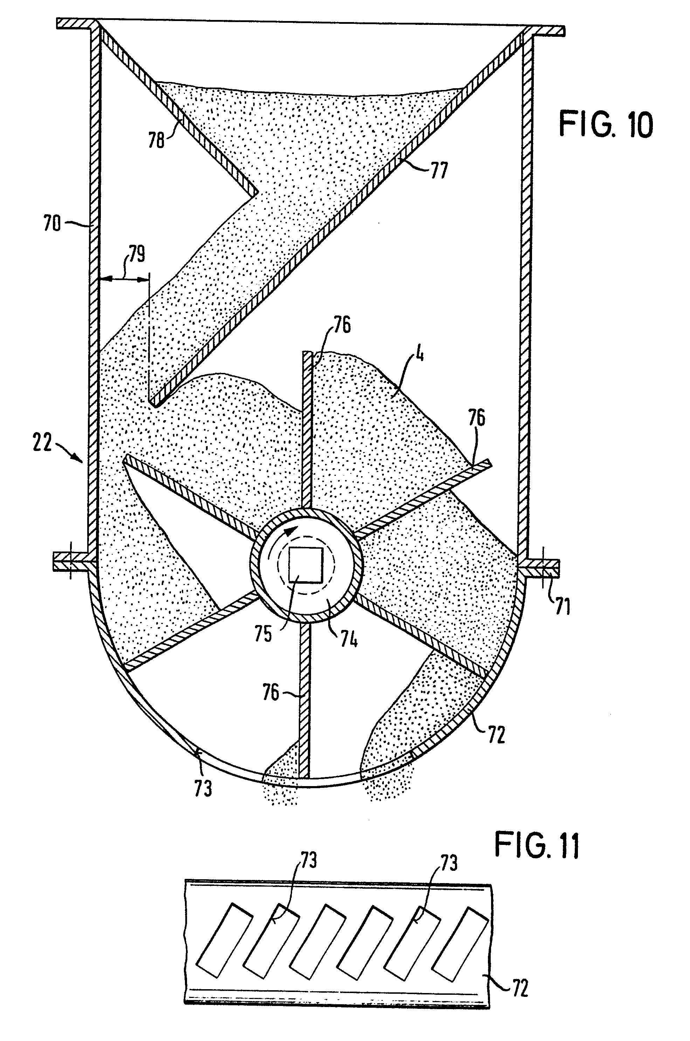

In Fig. 9 ist ein selbstabdichtendes Zellrad zum Austrag des Kornguts nach dem Abdarren dargestellt. Dieses besteht im wesentlichen aus einem Schacht 70, an dessen unterem Ende über eine Flanschverbindung 71 ein Trog 72 befestigt ist. Dieser Trog 72 weist an seiner Unterseite schräge Schlitze 73 auf, welche in Fig. 10 genauer dargestellt sind. Das Zellrad besteht aus einer Nabe 74, welches zentrisch ein Mitnahmeprofil 75 aufweist, und aus speichenförmigen Zellwänden 76, über deren Außenkanten sich das Zellrad in dem Trog 72 während der Drehbewegung abstützt. Das Zellrad weist folglich keine Achslagerung auf. An der Oberseite des Schachtes sind Einlaufrutschen 77 und 78 angeordnet, wobei die Einlaufrutsche 77 soweit in den Schacht 70 hineingezogen ist, daß zwischen der unteren Kante der Einlaufrutsche 77 und dem Schacht 70 lediglich ein relativ schmaler Durchtritt für das Gut frei bleibt. Des weiteren ist die untere Kante der Einlaufrutsche 77 im wesentlichen tangential zu dem Umfang des Zellrades angeordnet, so daß bei einer Drehung des Zellrades, wie in Fig. 9 dargestellt, im Uhrzeigersinn, das Korngut durch den Durchtritt 79 hindurch auf die nach oben sich bewegenden Zellwände fällt, so daß die zwischen jeweils zwei Zellwänden gebildete Zelle locker mit Gut gefüllt wird, ohne daß eine Stauung des Guts stattfindet. Das Gut wird dann weitergetragen, bis es durch die Längsschlitze 73 an der Unterseite des Troges 72 ausgeschoben wird.

Die Einrichtung zum kontinuierlichen Mälzen bzw. Darren von zerealem Korngut nach der Erfindung arbeitet folgendermaßen:

Gelangt das Korngut auf einen der Hordenböden gemäß Fig. 7 oder 8 - gewöhnlich ist auf den Hordenböden eine Schicht von ca. 80 cm Korngut vorhanden - und ist die Verweilzeit der untersten Schicht beendet, wird die Schiebeeinrichtung betätigt. Über eine nicht dargestellte Betätigungsvorrichtung wird dabei die Achse 47 axial in einer Richtung um den vorbestimmten Hub verschoben. Hierdurch wird das Korngut, welches über den Korndurchlaß 44 neben den Korngutschieber 60 gelangt ist und sich auf der Seite der Bewegungsrichtung befindet, vom Korngutschieber 60 vor sich hergeschoben, bis es in den Durchtritt 54 hineinfällt. Das in den Durchtritt 54 hineingelangende Korngut 4 fällt nunmehr unter dem Eigengewicht durch den Durchtritt 54, wobei es gleichzeitig von hochströmender Luft umspült wird. Dabei lösen sich die einzelnen Körner des Kornguts voneinander und rieseln durch den zwischen der darunterliegenden Korngutschicht und der oberen Horde befindlichen, relativen hohen Freiraum, bis sie auf der Oberfläche der Korngutschicht der darunterliegenden Horde zu liegen kommen. Hierdurch ist der Vorteil gegeben, daß das Korngut, welches sich im Keimen befindet bzw. fertig gekeimt ist, in Abständen mehrmals durch einen Durchtritt geschoben wird und im freien Fall hinabrieselt, so daß durch das sich Voneinanderlösen der einzelnen Körner eine Verfilzung nicht staffinden kann. Auch eine Umschichtung, die sich auf die Qualität des Kornes negativ auswirken könnte, findet nicht statt. Da durch den relativ schmalen Schieber beispielsweise nur alle 8 Minuten ein Verschiebeweg, also ein Einfachhub, ausgeführt wird, wird eine nur relativ dünne Korngutschicht abgetragen, deren Körner insgesamt den gleichen Temperatur- und Feuchtigkeitsgrad aufweisen. Das Korngut rieselt also quasi kontinuierlich, beispielsweise alle 8 Minuten, durch die zwischen den Hordenelementen 46, 46a befindlichen Durchtritten 54 hindurch, und zwar vorzugsweise an allen Horden gleichzeitig, so daß praktisch ein kontinuierliches Abwärtsbewegen des Korngutes stattfindet, wodurch jedes Korn einen im wesentlichen vertikalen Fallweg bis unten in die Kühlzone mitmacht. Im Gegenstrom dazu wird insbesondere in der Darrzone das Behandlungsmedium geführt. Dies hat eine äußerst gleichmäßige Behandlung des gesamten Kornguts zur Folge. In der Kühlzone angekommen, wird das Korngut, wie in Fig. 4 dargestellt, über die zwei Einlaufkanäle bildenden Einlaufrutschen 37 und 38 zu jeweils zwei Schleusen geführt, die in etwa der gleichen Weise arbeiten wie die Horden-Schiebeeinrichtung. Das Korngut wird ebenfalls von einem Korngutschieber 45 oder 60 je nach Hub nach links oder rechts in einen der Durchtritte 54 geschoben und rieselt dabei in den untersten Sammelschacht 41, in welchem es noch durch weitere Kühlluft durchströmt und abgekühlt wird. Schließlich gelangt das Korngut zur letzten Schleuse 40, bei welcher es ebenfalls durch einen Korngutschieber gleicher Bauweise in entsprechende Austritte 54 geschoben wird, um schließlich über die Einlaufrutsche 77, in Fig. 9 gezeigt, auf das sich langsam, z.B. mit einer Umdrehung pro Minute drehende, Zellrad zu fallen und von diesem durch die Schrägschlitze 73 auf entsprechende Fördermittel ausgeschoben zu werden.

Patentansprüche:

1. Verfahren zum kontinuierlichen Mälzen von zerealem Korngut, bei dem das Korngut (4) einem mehrere vertikal übereinander angeordnete Horden (2) aufweisenden Behandlungsraum (1) von oben her zugeführt wird, in dem dann das Korngut dadurch von oben nach unten bewegt wird, daß jeweils von der auf einer Horde (2) befindlichen Korngutschicht eine dünne, zuunterst auf der Horde (2) aufliegende Teilschicht abgetragen und die abgetragene Schicht auf die obere Fläche der auf der darunterliegenden Horde (2) befindlichen Korngutschicht aufgetragen wird, und dabei das Korngut u.a. einer Behandlung durch ein Trocknungs- und Durchlüftungsmedium mit in den einzelnen Behandlungsstufen unterschiedlicher Temperatur und Feuchtigkeit unterzogen wird, dadurch gekennzeichnet, daß das Korngut (4) innerhalb des Behandlungsraums (1) dadurch in im wesentlichen stetiger Vertikal-Abwärtsbewegung gehalten wird, daß jeweils von der auf einer Horde (2) befindlichen Korngutschicht die zuunterst aufliegende
Teilschicht über die gesamte Hordenfläche im
wesentlichen gleichzeitig nach unten abgeführt
wird und daß das Korngut von dem Trocknungs- bzw.
Durchlüftungsmedium in im wesentlichen vertikaler
Richtung durchflossen bzw. umspült wird.

2. Verfahren nach Anspruch 1, dadurch
gekennzeichnet, daß das Trocknungs- oder Durchlüftungsmedium von unten nach oben (Gegenstrom)
das Korngut (4) durchströmt.

3. Verfahren nach Anspruch 1, dadurch
gekennzeichnet, daß das Trocknungs- oder Durchlüftungsmedium von oben nach unten (Gleichstrom)
das Korngut (4) durchströmt.

4. Verfahren nach Anspruch 1, dadurch
gekennzeichnet, daß von allen Hoden (2) gleichzeitig eine auf dem jeweiligen Hordenboden
aufliegende dünne, unterste Teilschicht von der
Korngutschicht abgetragen und auf die Korngutschicht der darunterliegenden Horde (2) aufgetragen wird.

5. Verfahren nach Anspruch 1, dadurch
gekennzeichnet, daß die Teilschichten von den
verschiedenen Horden (2) in unterschiedlichem
Rhythmus, je nach Verweilzeit auf den jeweiligen
Horden (2) abgetragen werden.

6. Verfahren nach Anspruch 1, dadurch gekennzeichnet, daß nur in einer der Darrzonen (10) die kontinuierliche, schichtweise Vertikal-Bewegung des Korngutes (4) in Gegenstromführung mit dem Trocknungsmedium stattfindet.

7. Verfahren nach einem der vorhergehenden Ansprüche, dadurch gekennzeichnet, daß ein Teil der auf Abdarrtemperatur aufgeheizten Frischluft mindestens einer der darüberligenden Horden zusätzlich zugeführt wird.

8. Verfahren nach den vorhergehenden Ansprüchen, dadurch gekennzeichnet, daß zur Erreichung der Gleichstrom- bzw. Gegenstromführung jeweils zwei Horden (2) einer eigenen Luftzuführung (17) zugeordnet sind.

9. Verfahren nach den vorhergehenden Ansprüchen, dadurch gekennzeichnet, daß zur Vortrocknung des Grünmalzes in einem separaten Vorratsbehälter (24) die durch eine Niedertemperatur-Abwärmeverwertung (18a) vorgewärmte Luft in den Vorratsbehälter (24) eingebracht wird.

10. Einrichtung zum kontinuierlichen Mälzen von zerealem Korngut, mit einem Behandlungsraum (1), in dem mehrere vertikal übereinander angeordnete Hordenböden (2) vorgesehen sind, in denen jeweils mehrere Durchtritte (54) angeordnet sind, die durch Schleusenschieber (56) zu öffnen sind, so daß das Korngut von einem Hordenboden zum anderen von oben nach unten durch den Behandlungsraum (1) bewegbar ist, dadurch gekennzeichnet, daß zum Abführen der jeweils zuunterst auf einem Hordenboden (2) aufliegenden Teilschicht der auf diesem Hordenboden (2) befindlichen Korngutschicht über die gesamte Hordenfläche gemäß den Verfahren nach Anspruch 1 zwischen jeweils zwei Durchtritten (56) jeweils ein Korngutschieber (45; 60) angeordnet ist, dessen vertikale Höhe der abzuräumenden Teilschicht im wesentlichen entspricht und der synchron mit den zugehörigen Schleusenschiebern (56) bewegbar ist.

11. Einrichtung nach Anspruch 10, dadurch gekennzeichnet, daß die Horde (2) aus nebeneinander angeordneten und mit ihren Schenkeln (53) nach unten weisenden U-Profilen (Hordenelemente 46) oder geschlossenen Hohlprofilen (46a) gebildet ist, und daß zwischen den benachbarten Schenkeln (53, 53a) der jeweils angrenzenden Hordenelemente (46, 46a) ein den Durchtritt (54) bildender Abstand vorgesehen ist.

12. Einrichtung nach Anspruch 10, dadurch gekennzeichnet, daß auf den Hordenelementen (46; 46a) parallel mit den Durchtritten (54) und quer zu diesen die verschieblichen Korngutschieber (45, 60) angeordnet sind.

13. Einrichtung nach Anspruch 12, dadurch gekennzeichnet, daß die Korngutschieber (45, 60) auf mindestens einer parallel zur Horde (2) in Verschieberichtung angeordneten Achse (47) angeordnet und mit dieser zumindestens in einer Richtung über einen Mitnehmer (49) befestigt sind.

14. Einrichtung nach Anspruch 12, dadurch gekennzeichnet, daß die Korngutschieber (60) eine im wesentlichen leistenförmige Ausbildung aufweisen, mit ihrer einen Schmalseite auf den Hordenelementen (46) verschieblich aufliegen und im wesentlichen die gleiche Länge wie die Durchtritte (54) besitzen.

15. Einrichtung nach Anspruch 12, dadurch gekennzeichnet, daß die Korngutschieber (45) im wesentlichen U-förmig ausgebildet sind und mit ihren Schenkeln auf den Hordenelementen (46, 46a) verschieblich aufliegen.

16. Einrichtung nach Anspruch 10, dadurch gekennzeichnet, daß auf den Hordenelementen (46, 46a) U-förmige Schleusenschieber (56) vorgesehen sind, die im wesentlichen über jeweils einem der Durchtritte (54) einstellbar sind, diese in dieser Mittelstellung verschließen und zusammen mit ihrer Achse (47) verschieblich angeordnet sind.

17. Einrichtung nach Anspruch 16, dadurch gekennzeichnet, daß die Breite (Schenkelabstand) des jeweiligen Schleusenschiebers (56) etwas größer als die Breite des zugeordneten Durchtrittes (54) ist.

18. Einrichtung nach Anspruch 16, dadurch gekennzeichnet, daß die Breite des jeweiligen Schleusenschiebers (56) im wesentlichen gleich der Summe der Breite des zugeordneten Durchtritts (54) und des durch den Korngutschieber (45 bzw. 60) ausgeführten Hubs ist, und daß der Schleusenschieber (59) auf der Achse (74) nur einseitig über einen Mitnehmer (48, 49) mitnehmbar angeordnet ist.

19. Einrichtung nach Anspruch 12, dadurch gekennzeichnet, daß der Verschiebeweg des Korngutschiebers (45, 60) im wesentlichen gleich groß wie die Breite des Durchtritts (54) ist.

20. Einrichtung nach Anspruch 10, dadurch gekennzeichnet, daß jeweils über einem Durchtritt (54) je zwei ein Dach (63) bildende Einlaufschrägen (64) angeordnet sind.

21. Einrichtung nach Anspruch 20, dadurch gekennzeichnet, daß das Dach (63) nach unten hin offen ist.

22. Einrichtung nach Anspruch 20, dadurch gekennzeichnet, daß die Einlaufschrägen (64) mit ihrem unteren Rand im wesentlichen auf einen der Korngutschieber (45, 60) weisen und dabei einen Korngutdurchlaß (44) bilden.

23. Einrichtung nach Anspruch 22, dadurch gekennzeichnet, daß die unteren Enden der Einlaufschrägen (64) in Richtung zu den Durchtritten (54) hin waagerecht abgebogen sind.

24. Einrichtung nach Anspruch 20, dadurch gekennzeichnet, daß das Dach (63) nach unten hin einen kastenförmigen Abschluß (56) aufweist, wodurch ein Zuluftkanal (66) gebildet ist.

25. Einrichtung nach Anspruch 24, dadurch gekennzeichnet, daß die Breite des Abschlusses (65) des Luftzufuhrkanals (66) ca. gleich der durch Durchtritt (54) am nächsten liegenden Abstand der Endposition von jeweils zwei nebeneinander angeordneten Korngutschiebern (45, 60) ist.

26. Einrichtung nach den Ansprüchen 10 und 11, dadurch gekennzeichnet, daß unter der Horde jeweils im wesentlichen mittig zum Hordenelement (46) je ein mit Düsen (61) versehenes Zuluftrohr (62) angeordnet ist.

27. Einrichtung nach den Ansprüchen 10 und 11, dadurch gekennzeichnet, daß das jeweilige aus einem Hohlprofil bestehende Hordenelement (46a) einen Zuluftkanal bildet und hierfür mit Düsen (61a) versehen ist.

28. Einrichtung nach Anspruch 10, dadurch gekennzeichnet, daß je ein Hordenelement (46; 46a) mindestens ein Zuluftkanal (62 und/oder 66), ein Korngutschieber (45 bzw. 60) und ein Schleusenschieber (56 bzw. 59) einen Hordenmodul bilden.

29. Einrichtung nach Anspruch 10, dadurch gekennzeichnet, daß an der Unterseite der schräge Rutschwände aufweisenden Kühlzone (15) mindestens ein selbstdichtendes Zellrad (22) angeordnet ist.

30. Einrichtung nach Anspruch 29, dadurch gekennzeichnet, daß das Gehäuse des Zellrades (22) aus einem Schacht (70) und einem an diesen über eine Flanschverbindung (71) befestigten Trog (72), der an seiner Unterseite Schrägschlitze (73) aufweist, bsteht.

31 Einrichtung nach Anspruch 29, dadurch gekennzeichnet, daß das Zellrad (22) im wesentlichen aus einer Nabe (74) mit einem zentrischen Mitnahmeprofil (75) und speichenförmigen Zellwänden (76) besteht, wobei das Zellrad (22) lediglich über die äußeren Kanten der Zellwände (76) am Innenumfang des Troges (72) abgestützt ist.

32. Einrichtung nach Anspruch 21, dadurch gekennzeichnet, daß eine Einlaufrutsche (77) in das Innere des Zellradschachtes (70) derart hineingezogen ist, daß sie im wesentlichen tangential zu dem Zellrad (22) auf der während des Betriebs nach oben sich bewegenden Seite steht, wodurch mit der Schachtwand ein Korngutdurchtritt (79) gebildet ist.

# FIG. 1

# FIG. 2

# FIG. 3

Freie ↑ —23

Abluft ↑

Vorratsbehälter 11/24

—27

Frischluft 10° | Wärmetauscher 25° | 26°
16 18

—36

Schwelken 30° 12

~60° 35 80°
~45° —34

Aufheizen ~68° 13

~70° —32

Abdarren 14

80°

—25

Gebläse 26° —20

26°
—29
33

Niedertemperatur-Abwärme-Verwertung 18a

—28

—30

—29
Lufterhitzung 21

80° —31

FIG. 4

FIG. 5

FIG. 6

## FIG. 7

## FIG. 8

# FIG. 9

FIG. 10

FIG. 11